Europäisches Patentamt

European Patent Office

Office européen des brevets

(11) Publication number: **0 611 669 A1**

## EUROPEAN PATENT APPLICATION

(21) Application number: **94101679.2**

(22) Date of filing: **04.02.94**

(51) Int. Cl.5: **B60C 15/04**, C21D 8/06

(30) Priority: **16.02.93 EP 93200437**

(43) Date of publication of application:
**24.08.94 Bulletin 94/34**

(84) Designated Contracting States:
**AT BE DE ES FR GB GR IT LU**

(71) Applicant: **N.V. BEKAERT S.A.**
**Bekaertstraat 2**
**B-8550 Zwevegem (BE)**

(72) Inventor: **van Raemdonck, Walther**
**Kortrijkstraat 70**
**B-8550 Zwevegem (BE)**

(74) Representative: **Messely, Marc, Ir. et al**
**N.V. Bekaert S.A.,**
**Bekaertstraat 2**
**B-8550 Zwevegem (BE)**

(54) **High-strength bead wire.**

(57) A steel wire (10) adapted for the reinforcement of the bead area of rubber tyres has a diameter d ranging from 0.75 mm to 2.50 mm, a tensile strength lying above 3100 - 600xd MPa, d being expressed in mm, a rubber adherable coating in the form of a copper alloy with a weight ranging from 0.10 to 1.40 grams per kilogram steel wire, and has a surface which is substantially free of residual macro tensile stresses in order to improve the torsional behaviour. The residual macro tensile stresses may be removed by subjecting the steel wire (10) to a series of subsequent bendings over rollers (12).

FIG.1

## FIELD OF THE INVENTION

The present invention relates to a steel wire adapted for the reinforcement of the bead area of rubber tyres.

Such a steel wire has a diameter ranging from 0.75 mm to 2.50 mm. Current steel wire diameters are 0.800 mm, 0.890 mm, 0.950 mm, 0.965 mm, 1.000 mm, 1.295 mm, 1.420 mm, 1.550 mm, 1.600 mm, 1.650 mm, 1.820 mm, 2.000 mm and 2.200 mm.

The present invention mainly relates to steel wires having a round cross-section and which are especially adapted to reinforce cable-bead structures for passenger and truck tyres, single-wire bead structures and tape-wound bead structures for passenger tyres and hexagonal or shaped bead structures for truck tyres.

## BACKGROUND OF THE INVENTION

In a continuing trend towards realizing tyres having ever lower weights, efforts have been made to decrease the weight of the bead structure also. Reduction of the weight of the bead structure necessarily means a reduction in the cross-sectional area of the bead structure. If the overall breaking load of the bead structure must remain unchanged or must exceed a predetermined minimum limit, steel wires with higher individual tensile strengths must be chosen. Besides selecting a proper rod composition, these high tensile strengths can only be obtained by subjecting the steel wires to a high deformation, e.g. by way of cold drawing. If no measures are taken, the high tensile strengths are obtained at the expense of other features such as a good torsional behaviour.

The problem with high-tensile steel wires adapted for the reinforcement of the bead area of tyres is particularly important for the following reasons :

(i) after the final drawing step, the steel wires are in most cases subjected to a stress-relieving treatment in order to give the steel wire the necessary elongation and to give the steel wire a proper surface before coating ; this stress-relieving treatment lowers the tensile strength of the steel wire with five to ten per cent, and even with fifteen per cent; the higher the tensile strength and the more extensive the final deformation, the higher the decrease in tensile strength ; in order to compensate for this reduction in tensile strength, the applied deformation of the steel wires needs to be higher than the level corresponding to the predetermined tensile strength, this means an increased risk for a still lower level of other features such as the torsional behaviour ;

(ii) after the stress-relieving treatment, the steel wires are provided with a thin coating of a rubber adherable material such as a suitable copper alloy ; the coating of the steel wires can be done by means of a well-known thermodiffusion treatment which also heats the steel wires during a determined period of time ; this thermodiffusion treatment is likely to cause a still further decrease in tensile strength of the steel wires ; moreover, additional measures taken in order to improve the torsional behaviour must not cause any harm to the coating layer.

Summarizing, the realisation of a steel wire adapted for the reinforcement of the bead area of tyres and having both a very high tensile strength and a good torsional behaviour, requires the reconciliation of two measures which seem, at first sight, to be conflicting.

## SUMMARY OF THE INVENTION

It is an object of the present invention to provide for a steel wire which is adapted for the reinforcement of the bead area of tyres and which has a high tensile strength and a good torsional behaviour.

According to a first aspect of the present invention, there is provided a steel wire adapted for the reinforcement of the bead area of rubber tyres. The steel wire has a diameter ranging from 0.75 to 2.50 mm and a tensile strength above $3100 - 600 \times d$ MPa (MPa = Mega-Pascal ; 1 MPa = 1 Newton/mm$^2$), preferably above $3200 - 600 \times d$ MPa, d being the the final diameter of the steel wire and being expressed in mm. Examples of values of the high tensile strength level according to the present invention are as follows : 2600 MPa for d = 1.000 mm, 2420 MPa for d = 1.295 mm, 2300 MPa for d = 1.550 mm and 2130 MPa for d = 1.830 mm.

The carbon content preferably ranges from 0.80 to 0.98 per cent by weight.

The steel wire further has a rubber adherable coating in the form of a copper alloy with a weight ranging from 0.10 to 1.40 grams per kilogram steel wire.

The whole surface of the steel wire is substantially free of residual macro tensile stresses, which means that when the steel wire has been sawn in the middle over a predetermined distance in the longitudinal direction, the two halves remain at a distance from one another of maximum the thickness of the incision (see detailed description of test infra).

The surface of the steel wire preferably has a residual macro compressive stress in a range from zero up to the limit of elasticity in compression. This means that when the steel wire has been sawn in the middle over a predetermined distance in the longitudinal direction, the two halves do not remain at a distance from one another of the thickness of the incision, but tend to approach and to even contact one another. The higher the final tensile strength, the higher the preferred degree of residual macro compressive stress.

It has been discovered that for the above-mentioned high level of tensile strength, the stress-relieving treatment of the steel wire does not improve or does not improve sufficiently the torsional behaviour of the steel wires. A supplementary treatment of applying residual macro compressive stresses substantially improves the torsional behaviour.

The copper alloy coating may be a bronze coating with a weight ranging from 0.10 to 0.75 grams per kilogram steel wire. The copper alloy coating may also be a brass coating with a weight ranging from 0.20 to 1.40 grams per kilogram.

A steel wire according to the invention is further characterized in that it has no delamination under torsional strains and that it has a percentage total elongation at fracture of at least five.

According to a second aspect of the present invention, there is provided a method of improving the torsional behaviour of a steel wire adapted for the reinforcement of rubber tyres. The method comprises the steps of

(1) drawing the steel wire to a tensile strength well above 3175 - 600 x d MPa, d being the final diameter of the steel wire ranging from 0.75 to 2.50 mm and being expressed in mm ;

(2) stress-relieving the steel wire ;

(3) providing the steel wire with a copper alloy coating of a weight ranging from 0.10 to 1.40 grams per kilogram steel wire ;

(4) removing residual macro tensile stresses from the surface of the steel wire.

## BRIEF DESCRIPTION OF THE DRAWINGS

The present invention will hereinafter be explained in more detail with reference to the accompanying drawings wherein

Figure 1 schematically shows a way in which residual macro compressive stresses are applied to a steel wire ;

Figure 2(a) schematically shows the set-up of a test carried out to verify the kind of residual macro stresses present on the surface of a steel wire ;

Figures 2(b) to 2(c) show a tested steel wire having residual macro tensile stresses ;

Figures 2(d) to 2(e) show a tested steel wire having residual macro compressive stresses ;

Figures 3(a) to 3(h) illustrate the different types of torsion fractures and their respective codes when used in laboratory testing.

## DETAILED DESCRIPTION OF A PREFERRED EMBODIMENT

### Method of manufacturing.

A steel wire adapted for the reinforcement of the bead area of a tyre can be manufactured as follows. A wire rod having following characteristics is chosen as a start material : the carbon content is greater than 0.70 per cent by weight (%), and ranges e.g. between 0.80 % and 0.98 %, or e.g. between 0.82 % and 0.95 %. An example of a suitable rod composition for such a steel wire is as follows : 0.825 % C, 0.520 % Mn, 0.230 % Si, and maximum sulphur and phosphorus contents of 0.020 %, the balance being iron and unavoidable impurities. Micro-alloying elements such as chromium, however, are not excluded here. The wire rod with a diameter of about 5.5 mm or 6.5 mm is cold drawn in a conventional way to an intermediate diameter and subjected to a well-known patenting treatment. After patenting, the steel wire is further drawn to its final diameter. This deformation determines, together with the steel composition, to a large extent the final tensile strength. The steel wire is subsequently subjected to a stress-relieving treatment, e.g. by annealing the steel wire. The annealing treatment substantially lowers the tensile strength. A plating is further applied to the steel wire in order to provide the steel wire with a bronze or brass coating. This plating can be done in a chemical and/or an electro-chemical way.

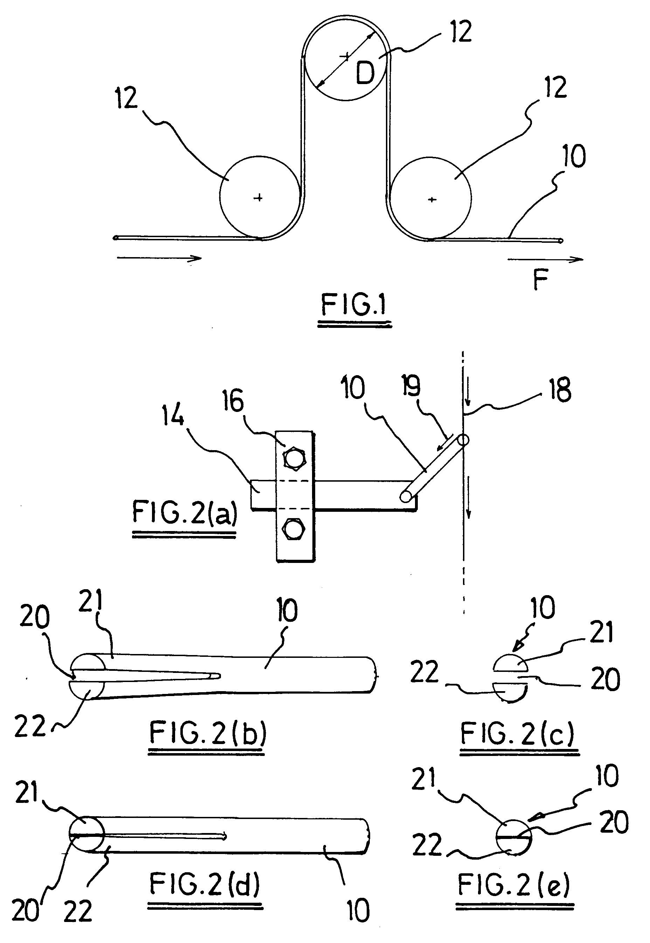

As a result of the extensive drawing process, the steel wire has residual macro tensile stresses on its surface. These tensile stresses are to a certain degree but not totally removed by the above-mentioned stress-relieving or annealing treatment. Total removal of the stresses could be considered in a number of cases by increasing the temperature of the stress-relieving or annealing treatment. This would result, however, in a still greater drop of tensile strength, which means that the temperature of the annealing treatment is limited. With this limited annealing treatment, the torsional behaviour of the steel wires remains insufficient in most cases. Moreover, in cases of very high deformation during the drawing process, subsequent annealing does not even change the (bad) torsional behaviour of the steel wires. It has now been discovered that subjecting the steel wire to a series of subsequent bendings, as is schematically illustrated in Figure 1, considerably improves the torsional behaviour of a steel wire. Referring now to Figure 1, a steel wire 10 is bent under a tensile force F over a number of subsequently arranged rollers with a diameter D. This treatment of removing the tensile stresses from a single steel wire is very similar to the process for applying residual compressive stresses on a steel cord in order to improve its fatigue resistance, as is explained in patent application GB-A-2 092 629 of applicant. The higher the tensile force F, the smaller the chance for residual macro tensile stresses and, once the tensile stresses have disappeared, the greater the degree of residual macro compressive stresses. Figure 1 shows only one series of three bending rollers 12, the rollers being located in one plane. The higher the number of different planes in which bending rollers 12 are located, the smaller the chance for residual macro tensile stresses and, once the macro compressive stresses are present, the higher the degree of residual compressive stresses.

Test.

The kind of residual macro stresses which are present on the surface of the steel wire, tensile or compressive stresses, is determined in the following way.

Referring to Figure 2(a), a limited length of a steel wire 10, say 2.5 to 4 cm, is fixed in the hole of a plate 14. This plate 14 is removably fixed on an apparatus (apparatus not shown) by means of another plate 16. The steel wire is subsequently sawn in two halves in the longitudinal direction (arrow 19) by means of a wire saw 18 which has been provided with diamond particles. The sawing length or incision 20 may be 1.5 to 2 cm.

Figures 2(b) and 2(c) represent the case when residual macro tensile stresses are present on the surface of steel wire 10. The two halves 21 and 22 tend to widen the incision opening 20. Their interdistance is greater than the thickness of the original incision which is equal to the diameter of the wire saw 18.

Figures 2(d) and 2(e) represent the case when residual macro compressive stresses are present on the surface of steel wire 10. The two halves 21 and 22 tend to close the incision opening 20. Their interdistance is smaller than the thickness of the original incision and is, in a number of cases, even zero : the two halves contact one another.

This test allows to determine the kind of residual macro stresses present on the surface of a steel wire at least in a qualitative way.

Example

An amount of steel wire having a carbon content of 0.88 % has been drawn to a final diameter of 1.300 mm. The true strain $\epsilon$ of the drawing steps following the last patenting treatment was more than 2.8.

Part of the amount has been subjected to a treatment to remove the residual macro tensile stresses (= invention steel wire). The other part of the amount has remained unchanged (= reference steel wire). The following Table summarizes the results.

4

TABLE

|  | reference steel wire | invention steel wire |
|---|---|---|
| TENSILE TEST<br>tensile strength before annealing (MPa) | 2566<br>2620<br>2618<br>2507<br>2529<br>2561 | 2566<br>2620<br>2618<br>2507<br>2529<br>2561 |
| final tensile strength (MPa) | 2404<br>2394<br>2371<br>2407<br>2386<br>2421 | 2367<br>2371<br>2343<br>2386<br>2367<br>2431 |
| total elongation at fracture (%) of final wire | 6.60<br>6.62<br>6.45<br>6.25<br>6.27<br>6.75 | 6.50<br>5.98<br>6.92<br>6.62<br>6.32<br>6.38 |

| TORSION TEST | | |
|---|---|---|
| number of twists | 44 | 50 |
| before fracture | 48 | 50 |
| of final wire | 53 | 53 |
| | 32 | 49 |
| | 46 | 49 |
| | 49 | 50 |
| fracture code | 2B | IA |
| | 2A | 1A |
| | 2A | 1A |
| | 2A/3C | 2B |
| | 2A/2B | 1A |
| | 2A | IA |

The torsion test has been carried out on wire samples with a length of 200 mm and indicates that the invention wire has an improved torsional behaviour : the number of twists before fracture is higher for the invention wires than for the reference wires.

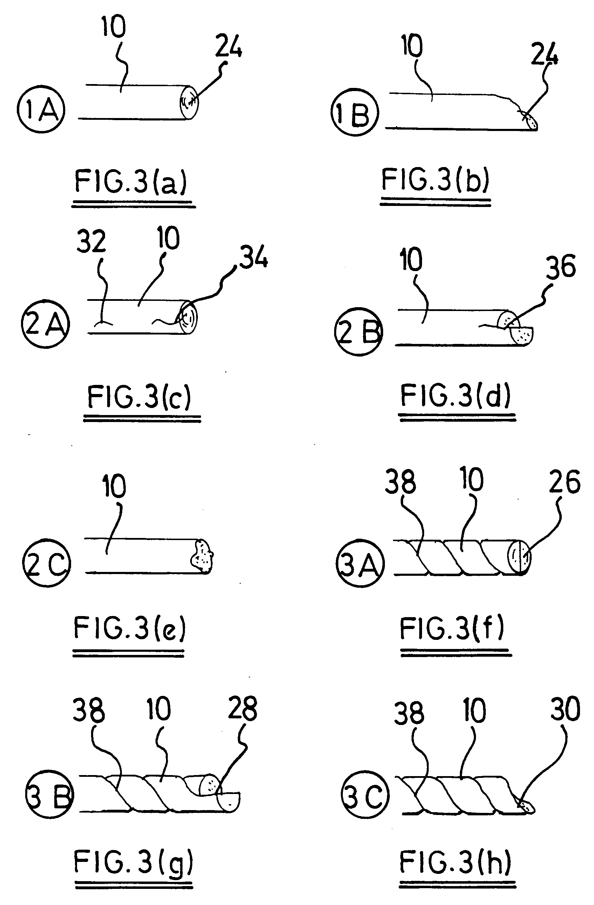

That the invention wires have an improved torsional ductility is also made clear by the type of torsion fractures. Referring to Figure 3, torsion fracture surfaces can be classified in three types ranging from completely flat fracture surfaces 24 (Figures 3(a) and (b)) to very irregular fracture surfaces 26, 28, 30 (Figures 3(f), (g) and (h)). Figures 3(a) and (b) illustrate the normal torsion fractures and are respectively coded 1A and 1B. They indicate good torsional ductility. Figures 3(c), (d) and (e) show torsion fractures with local cracks 32, 34, 36 and point to a decreased torsional ductility. They are respectively coded 2A, 2B and 2C. Figures 3(f), 3(g) and 3(h) show torsion fractures with helicoidal cracks 38 along the wire length and are coded respectively 3A, 3B and 3C. The 3-type fracture is mainly the result of delamination. This delamination is characterized by a longitudinal splitting at the wire surface, at the early stage of plastic torsion deformation. Further torsioning gives the wire 10 its typical helicoidal shear bands 38.

The fracture codes mentioned in the above Table all indicate an improved torsional behaviour of the invention wires with respect to the reference wires.

The above-mentioned results of improved torsional behaviour are remarkable in the following respect. The above-mentioned treatment of subjecting the invention wire to a series of subsequent bendings is considered to be a treatment which may cause the longitudinal characteristics of the wire to change. A torsional load, however, causes strains in the circumferential direction of the cross-section of a wire. Nevertheless, a wire, after having been subjected to the above treatment of subsequent bendings surprisingly shows an improved behaviour when subjected to strains in the circumferential direction.

**Claims**

1. A steel wire adapted for the reinforcement of the bead area of rubber tyres, the steel wire having a diameter d ranging from 0.75 mm to 2.50 mm, having a tensile strength lying above 3100 - 600xd MPa, d being expressed in mm, having a rubber adherable coating in the form of a copper alloy with a weight ranging from 0.10 to 1.40 grams per kilogram steel wire, the surface of the steel wire being substantially free of residual macro tensile stresses.

2. A steel wire according to claim 1, having a number of torsions before fracture of at least 50, for a wire length of 200 mm.

3. A steel wire according to claim 1 having no delamination under torsional loads.

4. A steel wire according to claim 1 wherein the percentage total elongation at fracture is at least five per cent.

5. A steel wire according to claim 1 wherein the fracture of the steel wire is 1A.

6. A steel wire according to claim 1 wherein the fracture of the steel wire is 1B.

7. A steel wire according to claim 1, the surface of the steel wire having residual macro compressive stresses ranging up to the limit of elasticity in compression.

8. A steel wire according to claim 1, further having a carbon content between 0.80 and 0.98 per cent by weight.

9. A steel wire according to claim 1, wherein the copper alloy is bronze.

10. A steel wire according to claim 1, wherein the copper alloy is brass.

11. A method of improving the torsional behaviour of a steel wire adapted for the reinforcement of rubber tyres, the method comprising the steps of
(1) drawing the steel wire to a tensile strength well above 3100 - 600 x d MPa, d being the final diameter of the steel wire ranging from 0.75 to 2.50 mm and being expressed in mm ;
(2) stress-relieving the steel wire ;
(3) providing the steel wire with a copper alloy coating of a weight ranging from 0.10 to 1.40 grams per kilogram steel wire ;
(4) removing residual macro tensile stresses from the surface of the steel wire.

FIG.1

FIG.2(a)

FIG.2(b)

FIG.2(c)

FIG.2(d)

FIG.2(e)

FIG.3(a)

FIG.3(b)

FIG.3(c)

FIG.3(d)

FIG.3(e)

FIG.3(f)

FIG.3(g)

FIG.3(h)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | EP-A-0 431 822 (SUMITOMO RUBBER INDUSTRIES LTD.) <br> * claims * <br> --- | 1 | B60C15/04 <br> C21D8/06 |
| Y | EP-A-0 218 167 (NIPPON STEEL CORP.) <br> * page 6, column 9, line 5 - page 7, column 12, line 23; claims; figures; tables * <br> --- | 1 | |
| A | FR-A-1 600 150 (HÜTTENWERK OBERHAUSEN AG.) <br> * page 6; tables * <br> --- | 1 | |
| A | EP-A-0 008 201 (NATIONAL-STANDARD CO.) <br> * claims; tables * <br> --- | 1 | |
| A,D | GB-A-2 092 629 (BEKAERT S.A.) <br> * claims; figures * <br> --- | 1,11 | |
| A | LU-A-67 100 (MONSANTO CO.) <br> * claims * <br> --- | 11 | TECHNICAL FIELDS SEARCHED (Int.Cl.5) |
| A | EP-A-0 489 159 (NIPPON STEEL CO.) <br> * claims; figure 1 * <br> ----- | 11 | B60C <br> C21D |

The present search report has been drawn up for all claims

| Place of search | Date of completion of the search | Examiner |
|---|---|---|
| THE HAGUE | 4 May 1994 | Baradat, J-L |